# EUROPÄISCHE PATENTSCHRIFT

(11) **EP 3 628 537 B1**
(45) Veröffentlichungstag und Bekanntmachung des Hinweises auf die Patenterteilung: **20.04.2022**
(21) Anmeldenummer: 19202215.0
(22) Anmeldetag: 18.08.2015
(51) Int. Cl.: B60N 2/28

(54) **KINDERSITZ FÜR EIN KRAFTFAHRZEUG**
CHILD SEAT FOR A MOTOR VEHICLE
SIÈGE AUTO POUR UN VÉHICULE AUTOMOBILE

(30) Priorität: 29.08.2014 DE 202014104056 U
(43) Veröffentlichungstag der Anmeldung: 01.04.2020
(62) Teilanmeldung aus: 15181315.1
(73) Patentinhaber: CYBEX GmbH, 95448 Bayreuth (DE)
(72) Erfinder: POS, Martin, 95444 Bayreuth (DE)
(74) Vertreter: Pfrang, Tilman

(56) Entgegenhaltungen:
- EP-A1- 1 969 975
- EP-A2- 1 717 095
- DE-T2- 69 923 281
- DE-U1-202011 000 229

## Beschreibung

Die Erfindung betrifft einen Kindersitz für ein Kraftfahrzeug mit einer Trageschale mit Tragegriff und einer innerhalb der Trageschale angeordneten Sitzeinheit.

Derartige Kindersitze sind bspw. aus der DE 699 23 281 T2 bekannt. Dort wird ein Kindersitz für ein Kraftfahrzeug beschrieben, umfassend einen Sitzkörper mit einem Rückenabschnitt und einem Sitzabschnitt. Eine obere Rückenstütze ist zur Bewegung in eine Richtung zum und weg vom Sitzabschnitt auf dem Rückenabschnitt montiert. Über eine "Steuereinrichtung" kann eine Position der oberen Rückenstütze relativ zu dem Rückenabschnitt variiert werden.

Insgesamt wird durch die DE 699 23 281 T2 eine gewisse Anpassung an die Sitz- bzw. Liegeposition eines (insbesondere sehr jungen) Kindes ermöglicht. Diese Anpassung wird jedoch noch als verbesserungswürdig angesehen, insbesondere im Hinblick auf die Gurtführung bzw. die Sitz-/Liegeposition des Kindes.

Verstellbare Kindersitze sind weiterhin aus EP 1 969 975 A1 und EP 1 717 095 A2 bekannt.

DE 20 2011 000 229 U1 zeigt einen Babyträger in Form eines Schalensitzes, in dem ein Sitz- und ein Rückenlehnenelement integriert sind, von denen mindestens eines im Neigungswinkel verstellbar gelagert ist.

Der Erfindung liegt die Aufgabe zugrunde einen Kindersitz für ein Kraftfahrzeug vorzuschlagen, wobei die Anpassung einer Sitz-Position verbessert werden soll, insbesondere hinsichtlich der Gurtführung und/oder der Variation der Sitzposition. Diese Aufgabe wird durch einen Kindersitz für ein Kraftfahrzeug gemäß Anspruch 1 gelöst. Der Kindersitz umfasst eine Trageschale mit Tragegriff (z. B. Tragebügel) und eine innerhalb der Trageschale angeordnete Sitzeinheit.

Die Sitzeinheit umfasst vorzugsweise einen Rückenabschnitt, einen Sitzabschnitt, einen Beinabschnitt, eine obere Rückenstütze, die zur Bewegung in eine Richtung zum und weg vom Sitzabschnitt auf dem Rückenabschnitt der Sitzeinheit montiert ist, eine Einrichtung zur Veränderung der Position der oberen Rückenstütze relativ zum Rückenabschnitt, und ein Gurtzeug mit zwei Schultergurten, wobei jeder Schultergurt durch einen entsprechenden Schlitz im Rückenabschnitt sowie in der oberen Rückenstütze hindurchgeführt ist, wobei den Gurtschlitzen im Rückenabschnitt jeweils schwenkbar gelagerte Gurtführungen zugeordnet sind. Ein Gedanke, der mit diesen Merkmalen verbunden ist, liegt also darin, dass im Bereich der Gurtschlitze im Rückenabschnitt Gurtführungen vorgesehen sind, die schwenkbar gelagert sind. Durch eine derartige Verschwenkbarkeit kann auf eine einfache Art und Weise eine Reibungskraft der Gurtführung verringert werden und insbesondere ein Verdrehen des Gurtes verhindert werden (oder zumindest das Risiko für ein derartiges Verdrehen reduziert werden).

Vorzugsweise sind die Gurtführungen an der Rückseite des Rückenabschnittes jeweils um sich (etwa) senkrecht zum Rückenabschnitt erstreckende Achsen schwenkbar gelagert. Dadurch wird besonders effektiv eine Verdrillung der Schultergurte bzw. eine unerwünschte Erhöhung der Reibung innerhalb der Gurtführungen reduziert (oder gänzlich vermieden).

Vorzugsweise sind die beiden Schultergurte an der Rückseite des Rückenabschnitts unterhalb der beiden rückseitig angeordneten Gurtführungen zu einem Y-Gurt zusammengeführt, also verbunden. Durch eine derartige Maßnahme wird der konstruktive Aufwand reduziert und gleichzeitig eine zuverlässige (reibungsfreie) Führung der Schultergurte ermöglicht.

Gemäß der Erfindung ist die Sitzeinheit innerhalb der Trageschale aus einer Sitzposition mit sich (relativ) aufrecht erstreckendem Rückenabschnitt in eine Liegeposition mit sich (nahezu) horizontal erstreckendem Rückenabschnitt (und umgekehrt) verlagerbar.

Ein Kerngedanke der Erfindung liegt darin, den Kindersitz derart auszubilden, dass der Rückenabschnitt (nahezu) horizontal ausgerichtet werden kann. Unter "nahezu horizontal" soll insbesondere eine Ausrichtung verstanden werden, bei der der Rückenabschnitt einen Winkel von kleiner 20 °, insbesondere kleiner 15 ° gegenüber der Horizontalen aufweist, die durch einer unterseitige Ausbildung des Kindersitzes definiert wird (wenn diese auf einem ebenen Untergrund platziert ist. Unter "relativ aufrecht" soll insbesondere ein Winkel des Rückenabschnittes gegenüber der Horizontalen verstanden werden, der mehr als 40 °, insbesondere mehr als 50 ° beträgt. Der Rückenabschnitt ist in seiner Sitzposition vorzugsweise nicht exakt vertikal ausgerichtet, sondern weist einen Winkel von kleiner als 80 °, insbesondere kleiner als 65 ° gegenüber der Horizontalen auf. Der Rückenabschnitt kann in seiner Liegeposition horizontal ausgerichtet sein, weist jedoch vorzugsweise einen spitzen Winkel gegenüber der Horizontalen auf, vorzugsweise von mindestens 5 °, insbesondere mindestens 10 °.

In jedem Fall wird die Möglichkeit der Einstellung eines sich (nahezu) horizontal erstreckenden Rückenabschnittes geschaffen, so dass eine sichere und bequeme Position für das Kind (insbesondere im Schlaf) ermöglicht werden kann. Damit ist der Kindersitz auch insbesondere für längere Autofahrten gut geeignet.

Gemäß der Erfindung ist ein Beinabschnitt relativ zum einem Sitzabschnitt beweglich an diesem angeordnet derart, dass bei Verlagerung der Sitzeinheit in eine (insbesondere die oben genannte) Liegeposition der Beinabschnitt relativ zum Sitzabschnitt nach unten verschwenkt wird, vorzugsweise so, dass sich der Beinabschnitt ebenso wie der Sitz- und Rückenabschnitt in der Liegeposition der Sitzeinheit (nahezu) horizontal erstrecken.

Ein zentraler Gedanke der Erfindung liegt darin, dass der Beinabschnitt relativ zum Sitzabschnitt nach unten verschwenkt. Dadurch wird der Liegekomfort für das Kind weiter verbessert. Insbesondere können auch lange Autofahrten problemlos bewältigt werden.

Gemäß der Erfindung sind der Rücken- und Sitzabschnitt einerseits ebenso wie der Beinabschnitt andererseits jeweils über ein Gestänge an der Trageschale angelenkt. Damit kann die Sitzeinheit auf konstruktiv einfache Weise in die Liegeposition überführt werden.

Vorzugsweise umfasst das dem Rücken- und Sitzabschnitt zugeordnete Gestänge zwei seitlich auf (etwa) halber Länge des Rücken- und Sitzabschnitts angelenkte Verbindungsstreben, deren freie Enden jeweils an der Trageschale angelenkt sind. Unter "etwa halber" Länge kann insbesondere eine Positionierung zwischen 40 % und 60 % einer Erstreckung von Rücken- und Sitzabschnitt verstanden werden. In jedem Fall wird durch eine derartige Weiterbildung eine äußerst einfache Konstruktion aufgezeigt.

Vorzugsweise umfasst das dem Beinabschnitt zugeordnete Gestänge zwei seitlich nahe dem hinteren bzw. dem Sitz- und Rückenabschnitt zugewandten Ende angelenkte Verbindungsstreben, deren freie Enden jeweils an der Trageschale angelenkt sind. Insbesondere in Kombination mit dem dem Rücken- und Sitzabschnitt zugeordneten Gestänge wird dabei eine einfache Verschwenkung des Beinabschnittes mit sich (gleichzeitig) ändernder Sitz- bzw. Liegeposition realisiert. In einer fließenden Bewegung kann also sowohl eine Liegeposition eingenommen werden, als auch der Beinabschnitt nach unten schwenken.

Bevorzugt erstreckt sich das dem Sitz- und Rückenabschnitt zugeordnete Gestänge von der Rückseite dieses Abschnittes weg, während dass dem Beinabschnitt zugeordnete Gestänge sich entgegengesetzt erstreckt. Bei dieser Ausführungsform kann die Einstellung der Liegeposition und das gleichzeitige nach unten Schwenken des Beinabschnittes mit geringem Kraftaufwand und auf einfache Art und Weise erfolgen.

Erfindungsgemäß ist der Beinabschnitt bei Verlagerung der Sitzeinheit in eine (nahezu) horizontale Liegeposition oder zurück in einer an der Trageschale angeordneten sich (etwa) horizontal erstreckenden, insbesondere bogenförmigen Führungskulisse längsverschieblich gelagert. Über eine derartige Führungskulisse kann das nach unten Schwenken des Beinabschnitts auf einfache Art und Weise gesteuert werden.

Gemäß der Erfindung ist die Sitzeinheit sowohl in der Sitzposition als auch in der Liegeposition und auch in ein oder mehreren Zwischenpositionen relativ zur Trageschale verrastbar, wobei dem Rastmechanismus eine Handhabe zur Entrastung bzw. Entriegelung zugeordnet ist. Durch eine derartige Maßnahme wird die Sicherheit und Variabilität im Zusammenhang mit dem Kindersitz erhöht.

Weitere Ausführungsformen ergeben sich aus den Unteransprüchen.

Nachfolgend wird ein Kindersitz beschrieben, das anhand der Abbildungen näher erläutert wird.

Hierbei zeigen:
- Fig. 1: einen Kindersitz in Schrägansicht;
- Fig. 2: den Kindersitz gem. Fig. 1 mit teilweise freigelegtem Inneren in einer Seitenansicht und einer Sitzposition;
- Fig. 3: den Kindersitz gem. Fig. 2 in einer Liegeposition;
- Fig. 4: den Kindersitz gem. Fig. 1 bis 3 in einer Ansicht von oben;
- Fig. 5: eine Schrägansicht des Kindersitzes gem. Fig. 1 bis 4 mit teilweise freigelegtem Inneren in einer Liegeposition;
- Fig. 6: den Kindersitz gem. Fig. 5 in einer Sitzposition;
- Fig. 7: eine Seitenansicht des Kindersitzes gem. Fig. 1 bis 6 mit teilweise freigelegtem Inneren in einer Sitzposition;
- Fig. 8: den Kindersitz gem. Fig. 7 in einer Liegeposition;
- Fig. 9: einen Ausschnitt im Bereich der Gurtumlenkung des Kindersitzes in einer ersten Position; und
- Fig. 10: den Ausschnitt gem. Fig. 9 in einer zweiten Position.

In der nachfolgenden Beschreibung werden für gleiche und gleichwirkende Teile dieselben Bezugsziffern verwendet.

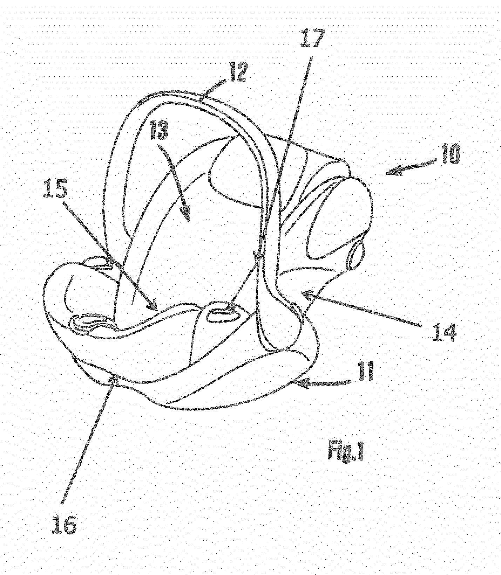

Fig. 1 zeigt eine Schrägansicht eines Kindersitzes. Dieser weist eine Trageschale 11 auf, innerhalb der eine Sitzeinheit 13 angeordnet ist.

Die Sitzeinheit 13 umfasst einen Rückenabschnitt 14, einen Sitzabschnitt 15 und einen Beinabschnitt 16. Eine Rückenstütze 17 ist beweglich auf dem Rückenabschnitt 14 gelagert und zwar so, dass die (obere) Rückenstütze 17 in eine Richtung zum und weg vom Sitzabschnitt 15 bewegt werden kann. Weiterhin kann eine Polsterung vorgesehen sein (die der Einfachheit halber nicht gezeigt ist).

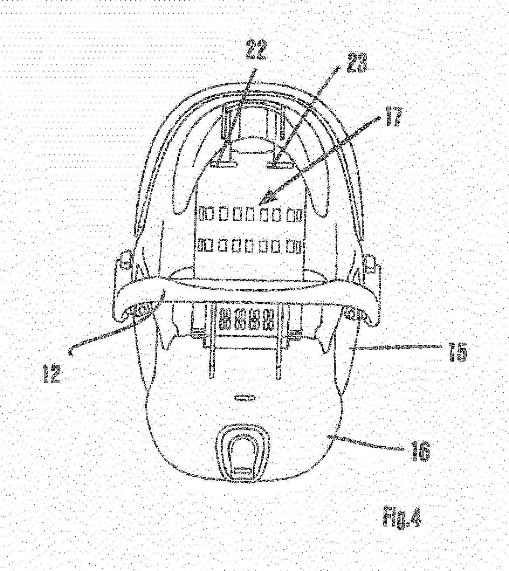

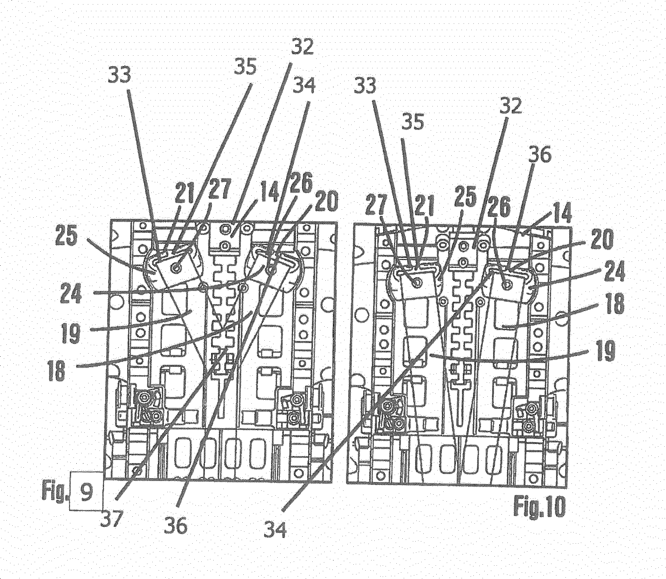

In Fig. 4 ist die Rückenstütze 17 von oben zu sehen. In der Rückenstütze 17 sind Gurtschlitze 22, 23 vorgesehen, durch die jeweils ein Schultergurt 18, 19 (s. Fig. 9 und 10) durchgeführt werden kann.

Die Fig. 9 und 10 zeigen eine Rückseite des Rückenabschnittes 14 (ausschnittsweise). In dem Rückenabschnitt 14 sind ebenfalls Schlitze 20, 21 vorgesehen, durch die die Schultergurte 18, 19 geführt werden können. Den Schlitzen 20 und 21 (und somit den korrespondierenden Schlitzen 23 und 22 der Rückenstütze 17) sind schwenkbar gelagerte Gurtführungen 24, 25 zugeordnet. Die Gurtführungen 24, 25 sind dabei jeweils um eine Achse schwenkbar gelagert, die senkrecht auf den Rückenabschnitt 14 steht.

Eine Einrichtung 32 (s. Fig. 9 und 10) dient der Verstellung einer Relativ-Position zwischen Rückenabschnitt 14 und Rückenstütze 17.

Wie man den Fig. 9 und 10 entnehmen kann, weisen die Schultergurte 18, 19 entweder einen vergleichsweise großen Winkel zueinander auf (s. Fig. 9) oder einen vergleichsweise kleinen Winkel (s. Fig. 10). Durch die Verschwenkbarkeit der Gurtführungen 24, 25 kann diese Änderung im Winkel auf einfache Weise ausgeglichen werden. Dadurch kann einer hohen Reibung oder einer Verdrillung der Schultergurte 18, 19 entgegengewirkt werden.

Die Gurtführungen 24, 25 weisen (schlitzförmige) Aufnahmen 33, 34 auf, in die über Öffnungen 35, 36 der korrespondierende Schultergurt 18, 19 eingefädelt werden kann.

Die Schultergurte 18, 19 sind unterhalb der Gurtführungen 24, 25 zu einem Y-Gurt zusammengeführt. Gem. Fig. 9 und 10 kann ein Punkt 37 der Zusammenführung entweder vergleichsweise weit oben (s. Fig. 9) oder vergleichsweise weit unten (s. Fig. 10) angeordnet sein.

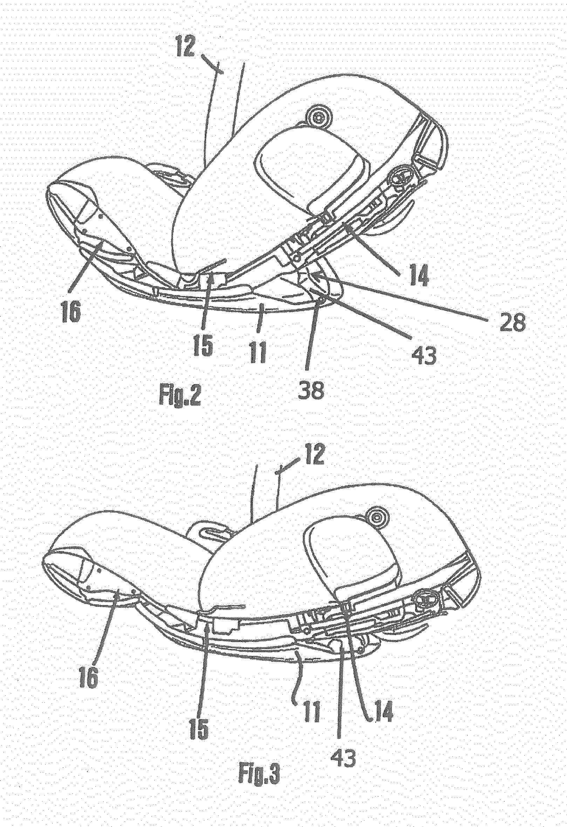

Die Fig. 2 und 3 zeigen Seitenansichten des Kindersitzes, wobei ein Inneres des Kindersitzes teilweise freigelegt ist. Insbesondere sind Schale 11 und Tragegriff 12 (= vorzugsweise Tragehenkel oder Tragebügel) nur teilweise dargestellt. Fig. 2 zeigt dabei eine Sitzposition, Fig. 3 eine Liegeposition.

Wie den Fig. 2 und 3 entnommen werden kann, erstreckt sich der Rückenabschnitt 14 in der Sitzposition (Fig. 2) vergleichsweise aufrecht (in einem Winkel von 30 bis 50 °). In der Liegeposition gem. Fig. 3 erstreckt sich der Rückenabschnitt 14 (nahezu) horizontal, bspw. in einem Winkel von 0 bis 25 °.

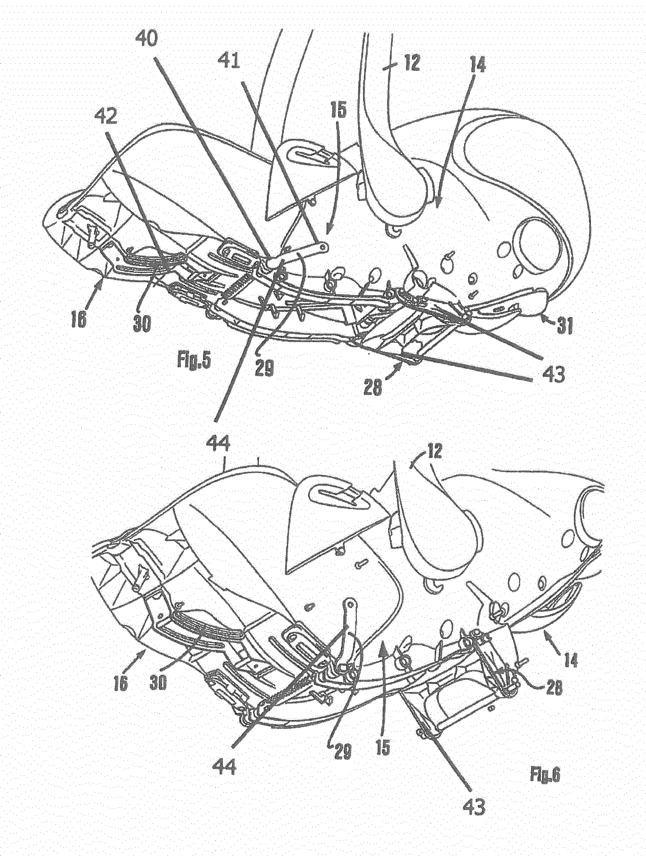

Dem Rücken- und Sitzabschnitt 14, 15 ist ein Gestänge 28 (s. Fig. 2 und 3) zugeordnet, das gelenkig an der Trageschale 11 montiert ist. Das Gestänge 28 umfasst zwei Verbindungsstreben 43, die an der Tragschale 11 angelenkt sind. Die Verbindungsstreben sind um eine Achse 38, die an der Trageschale 11 angeordnet ist, schwenkbar, so dass ein Ende der Verbindungsstreben 43, das an dem Sitz- und Rückenabschnitt 14, 15 (ebenfalls gelenkig) angeordnet ist, nach vorne schwenken kann und damit zusammen mit dem Sitz- und Rückenabschnitt 14, 15 gegenüber der Trageschale nach vorne bewegt werden kann (s. Fig. 5 bis 8). Dass mit dem Sitz- und Rückenabschnitt 14, 15 verbundene Ende der Verbindungsstreben 43 liegt dabei (zumindest in der Sitzposition (s. Fig. 2)) oberhalb des Endes der Verbindungsstreben 43, das mit der Trageschale 11 verbunden ist. In der Liegeposition (s. Fig. 3) können die jeweiligen Enden der Verbindungsstreben 43 auf (beinahe) gleicher Höhe angeordnet sein, wobei das Ende der Verbindungsstreben 43, das mit dem Sitz- und Rückenabschnitt 14, 15 verbunden ist, vor dem Ende der Verbindungsstreben 43 angeordnet ist, das mit der Trageschale 11 verbunden ist.

Ein weiteres Gestänge 29 lässt sich insbesondere in den Fig. 5 bis 8 erkennen.

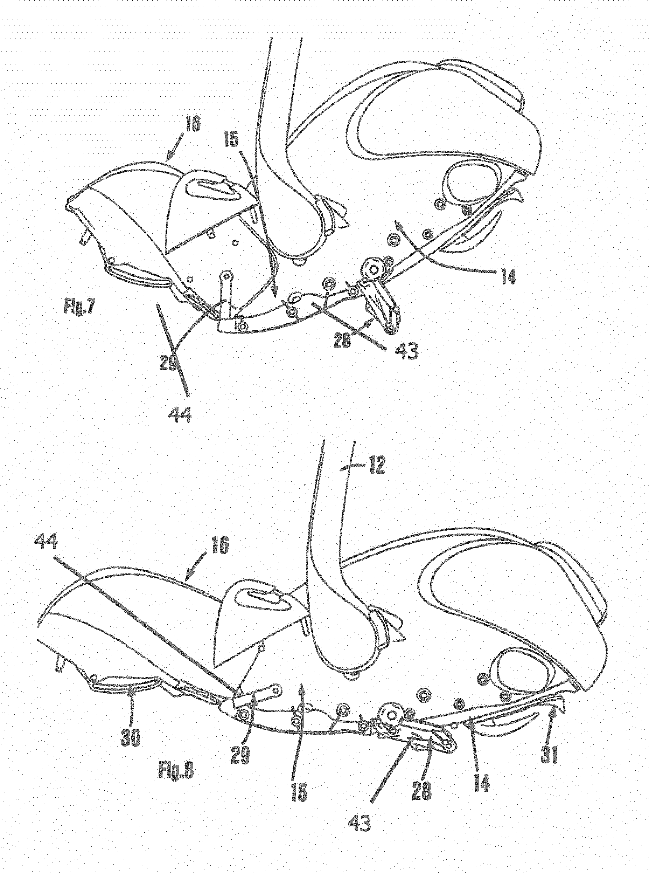

Die Fig. 5 und 6 zeigen verschiedene Positionen des Kindersitzes in einer Schrägansicht, wobei eine Sicht auf das Innere teilweise freigelegt ist. Die Fig. 7 und 8 zeigen entsprechende Seitenansichten. Das Gestänge 29 ist dem Beinabschnitt 16 zugeordnet. Das Gestänge 29 umfasst zwei Verbindungsstreben 44. Ein jeweiliges Ende 39 der Verbindungsstreben 44 ist an dem Beinabschnitt 16 angeordnet (konkret in einem Übergangsbereich zwischen Beinabschnitt 16 und Sitzabschnitt 15) und gelenkig gegenüber diesem gelagert, so dass es um eine Achse 40 drehbar ist. Genauso ist auch ein Ende 41 der Verbindungsstreben 44 drehbar gelagert, jedoch gegenüber der (in Fig. 5 bis 8 nicht gezeigten) Trageschale 11 (s. Fig. 1 bis 3).

Sowohl in der Liegeposition (s. Fig. 5) als auch in der Sitzposition (s. Fig. 6) ist das Ende 39 unterhalb des Endes 41 angeordnet. In der Sitzposition (s. Fig. 6) ist das Gestänge 29 (nahezu) vertikal ausgerichtet. Bei einer Überführung von der Sitzposition (Fig. 6) in eine Liegeposition (Fig. 5) pendeln die Verbindungsstreben 44 nach vorne und der Beinabschnitt 16 bewegt sich ebenfalls nach vorne gegenüber der Trageschale.

Um die Achse 40 kann weiterhin der Beinabschnitt 16 gegenüber dem Sitz- und Rückenabschnitt 14, 15 verschwenkt werden, und zwar so, dass er in der Liegeposition (Fig. 5) gegenüber der Sitzposition (Fig. 6) nach unten verschwenkt wird. Um den Beinabschnitt 16 nach unten zu verschwenken ist eine Führungskulisse 30 am Beinabschnitt vorgesehen, in der ein Stab 42 gleiten kann. Die Führungskulisse 30 (die genau genommen aus zwei parallel verlaufenden Kulissen besteht) ist bogenförmig ausgebildet, so dass eine Schwenkbewegung nach unten erzwungen wird. In der Sitzposition (Fig. 6) befindet sich der in der Führungskulisse 30 gleitende Stab 42 an einem Ende der Führungskulisse 30, das weiter weg vom Sitz- und Rückenabschnitt 14, 15 positioniert ist. In der Liegeposition (Fig. 5) befindet sich der Stab 42 in einer Position, die näher zum Sitz- und Rückenabschnitt 14, 15 liegt.

Insgesamt wird durch eine Zusammenwirkung der Gestänge 28, 29 sowie der Führungskulisse 30 durch ein nach vorne Bewegen der Sitzeinheit 13 (gegenüber der Trageschale 11) eine horizontale Ausrichtung des Sitz- und Rückenabschnittes realisiert, wobei gleichzeitig der Beinabschnitt 16 nach unten schwenkt (und ebenfalls horizontal ausgerichtet wird).

In Fig. 5 ist noch eine Handhabe 31 (Betätigungshebel) für die Freigabe der Sitzposition (Fig. 6) und der Liegeposition (Fig. 5) zu erkennen. Weiterhin ist ein Rastmechanismus (nicht im Detail in den Fig. dargestellt) vorgesehen, über den die Sitzposition bzw. Liegeposition verrastet werden kann. Über die Handhabe 31 kann dieser Rastmechanismus entrastet werden bzw. die jeweilige Position entriegelt werden. Vorzugsweise ist nicht nur Endpositionen (die in den Fig. 5 und 6 zu sehen sind), sondern auch Zwischenpositionen der Sitzeinheit 13 relativ zur Tragschale verrastbar (bspw. mindestens eine oder mindestens zwei oder mindestens vier Zwischenpositionen).

### Bezugszeichenliste

- 10: Kindersitz
- 11: Trageschale
- 12: Tragegriff
- 13: Sitzeinheit
- 14: Rückenabschnitt
- 15: Sitzabschnitt
- 16: Beinabschnitt
- 17: obere Rückenstütze
- 18: Schultergurt
- 19: Schultergurt
- 20: Gurtschlitz
- 21: Gurtschlitz
- 22: Gurtschlitz
- 23: Gurtschlitz
- 24: Gurtführung
- 25: Gurtführung
- 26: Drehachse
- 27: Drehachse
- 28: Gestänge
- 29: Gestänge
- 30: Führungskulisse
- 31: Handhabe
- 32: Einrichtung
- 33: Aufnahme
- 34: Aufnahme
- 35: Öffnung
- 36: Öffnung
- 37: Punkt
- 38: Achse
- 39: Ende
- 40: Achse
- 41: Ende
- 42: Stab
- 43: Verbindungsstrebe
- 44: Verbindungsstrebe

## Patentansprüche

1. Kindersitz (10) für ein Kraftfahrzeug mit einer Trageschale (11) mit Tragegriff (12) und einer innerhalb der Trageschale (11) angeordneten Sitzeinheit (13):
wobei
die Sitzeinheit (13) innerhalb der Trageschale (11) aus einer Sitzposition mit einem sich relativ aufrecht erstreckendem Rückenabschnitt (14) der Sitzeinheit in eine Liegeposition mit einem sich nahezu horizontal erstreckendem Rückenabschnitt (14) der Sitzeinheit, und umgekehrt, verlagerbar ist, wobei ein Beinabschnitt (16) der Sitzeinheit relativ zu einem Sitzabschnitt (15) der Sitzeinheit beweglich an diesem angeordnet ist, derart, dass bei Verlagerung der Sitzeinheit (13) in die Liegeposition der Beinabschnitt (16) relativ zum Sitzabschnitt (15) nach unten verschwenkt wird, so dass sich der Beinabschnitt (16) ebenso wie der Sitz- und Rückenabschnitt (14, 15) in Liegeposition der Sitzeinheit (13) nahezu horizontal erstrecken, dadurch gekennzeichnte, dass
der Beinabschnitt (16) bei Verlagerung der Sitzeinheit (13) in eine nahezu horizontale Liegeposition oder zurück in einer an der Trageschale (11) angeordneten sich etwa horizontal erstreckenden Führungskulisse (30) längsverschieblich gelagert ist, wobei die Sitzeinheit (13) sowohl in der Sitzposition als auch in der Liegeposition und auch in ein oder mehreren Zwischenpositionen relativ zur Trageschale (11) verrastbar ist, wobei dem Rastmechanismus eine Handhabe (31) zur Entrastung bzw. Entriegelung zugeordnet ist, wobei der Rücken- und Sitzabschnitt (14, 15) einerseits ebenso wie der Beinabschnitt (16) andererseits jeweils über ein Gestänge (28, 29) an der Trageschale (11) angelenkt sind.

2. Kindersitz nach Anspruch 1,
**gekennzeichnet durch**
- eine obere Rückenstütze (17), welche zur Bewegung in eine Richtung zum und weg vom Sitzabschnitt (15) auf dem Rückenabschnitt (14) der Sitzeinheit (13) montiert ist, und
- eine Einrichtung zur Veränderung der Position der oberen Rückenstütze (17) relativ zum Rückenabschnitt (14).

3. Kindersitz nach Anspruch 2,
**gekennzeichnet durch**
ein Gurtzeug mit zwei Schultergurten (18, 19), wobei jeder Schultergurt (18, 19) durch einen entsprechenden Schlitz (20, 21, 22, 23) im Rückenabschnitt (14) sowie in der oberen Rückenstütze (17) hindurch geführt ist.

4. Kindersitz nach Anspruch 3,
**dadurch gekennzeichnet, dass**
den Gurtschlitzen (20, 21, 22, 23) im Rückenabschnitt (14) jeweils schwenkbar gelagerte Gurtführungen (24, 25) zugeordnet sind.

5. Kindersitz nach einem der vorhergehenden Ansprüche,
**dadurch gekennzeichnet, dass**
das dem Rücken- und Sitzabschnitt (14, 15) zugeordnete Gestänge (28) zwei seitlich auf etwa halber Länge des Rücken- und Sitzabschnitts (14, 15) angelenkte Verbindungsstreben (43) umfasst, deren freie Enden jeweils an der Trageschale (11) angelenkt sind.

6. Kindersitz nach einem der vorhergehenden Ansprüche,
**dadurch gekennzeichnet, dass**
das dem Beinabschnitt (16) zugeordnete Gestänge (29) zwei seitlich nahe dem hinteren bzw. dem Sitz- und Rückenabschnitt (14, 15) zugewandten Ende angelenkte Verbindungsstreben (44) umfasst, deren freie Enden jeweils an der Trageschale (11) angelenkt sind.

7. Kindersitz nach Anspruch 5 und/oder 6,
**dadurch gekennzeichnet, dass**
das dem Sitz- und Rückenabschnitt (14, 15) zugeordnete Gestänge (28) sich von der Rückseite dieses Abschnittes weg erstreckt, während das dem Beinabschnitt (16) zugeordnete Gestänge (29) sich entgegensetzt erstreckt.

8. Kindersitz nach Anspruch 5,
**dadurch gekennzeichnet, dass**
der Sitz- und Rückenabschnitt (14, 15) gegenüber der Tragschale bei der Verlagerung in die Liegeposition nach vorne bewegbar ist.

9. Kindersitz nach Anspruch 4,
**dadurch gekennzeichnet, dass**
die Gurtführungen (24, 25) an der Rückseite des Rückenabschnittes (14) jeweils um etwa sich senkrecht zum Rückenabschnitt (14) erstreckende Achsen (26, 27) schwenkbar gelagert sind.

10. Kindersitz nach Anspruch 4 oder 9,
**dadurch gekennzeichnet, dass**
die beiden Schultergurte (18, 19) an der Rückseite des Rückenabschnittes (14) unterhalb der beiden rückseitig angeordneten Gurtführungen (24, 25) zu einem Y-Gurt zusammengeführt bzw. verbunden sind.

## Claims

1. Child seat (10) for a motor vehicle having a carrying shell (11) with carrying grip (12) and a seat unit (13) arranged within the carrying shell (11):
wherein the seat unit (13) is displaceable within the carrying shell (11) from a sitting position with a back portion (14) of the seat unit extending relatively upright to a reclining position with a back portion (14) of the seat unit extending nearly horizontally, and vice versa, wherein a leg portion (16) of the seat unit is movably arranged on a seat portion (15) of the seat unit relative thereto in such a way that, when the seat unit (13) is displaced into the reclining position, the leg portion (16) is pivoted downwards relative to the seat portion (15) so that the leg portion (16) as well as the seat and back portions (14, 15) extend almost horizontally in the reclining position of the seat unit (13), **characterized in that**, when the seat unit (13) is displaced into an almost horizontal reclining position or back, the leg portion (16) is mounted longitudinally displaceably in an approximately horizontally extending guide slot (30) arranged on the carrying shell (11), wherein the seat unit (13) can be locked relative to the carrying shell (11) both in the sitting position and in the reclining position and also in one or more intermediate positions, wherein the locking mechanism is assigned a handle (31) for unlocking or unlatching, wherein the back and seat portions (14, 15), on the one hand, and the leg portion (16), on the other hand, are each hinged to the carrying shell (11) via a linkage of rods (28, 29).

2. Child seat according to claim 1, **characterized by**
- an upper backrest (17) mounted on the back portion (14) of the seat unit (13) for movement in a direction toward and away from the seat portion (15), and
- a device for altering the position of the upper backrest (17) relative to the back portion (14).

3. Child seat according to claim 2, **characterized by** a harness having two shoulder straps (18, 19), wherein each shoulder strap (18, 19) passes through a corresponding slot (20, 21, 22, 23) in the back portion (14) and in the upper backrest (17).

4. Child seat according to claim 3, **characterized in that** the strap slots (20, 21, 22, 23) in the back portion (14) are each assigned pivotably mounted strap guides (24, 25).

5. Child seat according to one of the preceding claims, **characterized in that** the linkage of rods (28) assigned to the back and seat portions (14, 15) comprises two connecting struts (43) which are hinged laterally approximately halfway along the length of the back and seat portions (14, 15) and the free ends of said struts are each hinged to the carrying shell (11).

6. Child seat according to one of the preceding claims, **characterized in that** the linkage of rods (29) assigned to the leg portion (16) comprises two connecting struts (44) hinged laterally close to the rear end and the end facing the seat and back portion (14, 15) respectively, the free ends of which are each hinged to the carrying shell (11).

7. Child seat according to claim 5 and/or 6, **characterized in that** the linkage of rods (28) assigned to the seat and back portion (14, 15) extends away from the rear side of this portion, while the linkage of rods (29) assigned to the leg portion (16) extends in the opposite direction.

8. Child seat according to claim 5, **characterized in that** the seat and back portion (14, 15) is movable forwardly relative to the carrying shell when displaced into the reclining position.

9. Child seat according to claim 4, **characterized in that** the strap guides (24, 25) on the rear side of the back portion (14) are each pivotably mounted about axles (26, 27) extending approximately perpendicularly to the back portion (14).

10. Child seat according to claim 4 or 9, **characterized in that** the two shoulder straps (18, 19) are brought together or connected to form a Y-strap on the rear side of the back portion (14) below the two strap guides (24, 25) arranged on the rear side.

## Revendications

1. Siège d'enfant (10) pour un véhicule automobile, comportant une coque de transport (11) pourvue d'une poignée de transport (12) et une unité de siège (13) disposée à l'intérieur de la coque de transport (11), dans lequel l'unité de siège (13) est déplaçable à l'intérieur de la coque de transport (11) depuis une position assise dans laquelle la portion de dossier (14) s'étend relativement verticalement jusque dans une position couchée dans laquelle la portion de dossier (14) s'étend presque horizontalement et inversement, dans lequel une portion pour jambes (16) de l'unité de siège est agencée sur une portion d'assise (15) de l'unité de siège en étant mobile par rapport à celle-ci, de telle sorte que lors d'un déplacement de l'unité de siège (13) jusque dans la position couchée, la portion pour jambes (16) est basculée vers le bas par rapport à la portion d'assise (15), de sorte qu'en position couchée de l'unité de siège (13), la portion pour jambes (16), tout comme la portion d'assise et de dossier (14, 15), s'étendent presque horizontalement, **caractérisé en ce que**, lors d'un déplacement de l'unité de siège (13) jusque dans une position couchée presque horizontale ou en retour, la portion pour jambes (16) est montée de façon mobile en translation longitudinale dans une coulisse de guidage (30) s'étendant à peu près à l'horizontale qui est agencée sur la coque de transport (11), l'unité de siège (13) pouvant être enclenchée par rapport à la coque de transport (11) aussi bien dans la position assise que dans la position couchée et, le cas échéant, également dans une ou dans plusieurs positions intermédiaires, une manette (31) pour le déclenchement ou le déverrouillage étant associée au mécanisme d'enclenchement, la portion de dossier ou d'assise (14, 15) d'une part, tout comme la portion pour jambes (16) d'autre part, étant articulées sur la coque de transport (11) chacune par une tringlerie (28, 29).

2. Siège d'enfant selon la revendication 1, **caractérisé en ce qu'**il comporte
- un support dorsal (17) supérieur qui est monté sur la portion de dossier (14) de l'unité de siège (13) en vue d'un mouvement dans une direction vers et en éloignement de la portion d'assise (15) et
- un dispositif pour modifier la position du support dorsal supérieur (17) par rapport à la portion de dossier (14).

3. Siège d'enfant selon la revendication 2, **caractérisé en ce qu'**il comprend un ensemble de sangles comportant deux sangles d'épaule (18, 19), chaque sangle d'épaule (18, 19) étant passée à travers une fente correspondante (20, 21, 22, 23) dans la portion de dossier (14) ainsi que dans le support dorsal supérieur (17).

4. Siège d'enfant selon la revendication 3, **caractérisé en ce que** des guidages de sangle (24, 25) respectifs supportés avec possibilité de pivotement sont associés aux fentes à sangle (20, 21, 22, 23) dans la portion de dossier (14).

5. Siège d'enfant selon l'une des revendications précédentes, **caractérisé en ce que** la tringlerie (28) associée à la portion de dossier et d'assise (14, 15) comprend deux entretoises de liaison (43) articulées latéralement à peu près à mi-longueur de la portion de dossier et d'assise (14, 15), dont les extrémités libres sont articulées chacune sur la coque de transport (11).

6. Siège d'enfant selon l'une des revendications précédentes, **caractérisé en ce que** la tringlerie (29) associée à la portion pour jambes (16) comprend deux entretoises de liaison (44) articulées latéralement à proximité de l'extrémité arrière ou tournée vers la portion d'assise et de dossier (14, 15), dont les extrémités libres sont articulées chacune sur la coque de transport (11).

7. Siège d'enfant selon la revendication 5 et/ou 6, **caractérisé en ce que** la tringlerie (28) associée à la portion d'assise et de dossier (14, 15) s'étend en éloignement de la face arrière de ladite portion, tandis que la tringlerie (29) associée à la portion pour jambes (16) s'étend en sens opposé.

8. Siège d'enfant selon la revendication 5, **caractérisé en ce que** la portion d'assise et de dossier (14, 15) peut être déplacée vers l'avant par rapport à la coque de transport lors du passage dans la position couchée.

9. Siège d'enfant selon la revendication 4, **caractérisé en ce que** les guidages de sangle (24, 25) sont montés sur la face arrière de la portion de dossier (14) en étant chacun supporté de façon à pivoter autour d'axes (26, 27) qui s'étendent à peu près perpendiculairement à la portion de dossier (14).

10. Siège d'enfant selon la revendication 4 ou 9, **caractérisé en ce que** les deux sangles d'épaule (18, 19) sont réunies ou reliées en une sangle en Y sur la face arrière de la portion de dossier (14) en dessous des deux guidages de sangle (24, 25) agencés sur l'arrière.
